# EUROPÄISCHE PATENTSCHRIFT

(11) **EP 3 759 360 B1**
(45) Veröffentlichungstag und Bekanntmachung des Hinweises auf die Patenterteilung: **18.06.2025**
(21) Anmeldenummer: 19711051.3
(22) Anmeldetag: 11.03.2019
(51) Int. Cl.: F16B 5/00, F16B 11/00, C09J 5/00

(54) **VERFAHREN ZUM VERBINDEN ZWEIER WERKSTÜCKE**
METHOD FOR JOINING TWO WORKPIECES
PROCÉDÉ D'ASSEMBLAGE DE DEUX PIÈCES

(30) Priorität: 17.05.2018 DE 102018111857
(43) Veröffentlichungstag der Anmeldung: 06.01.2021
(73) Patentinhaber: Atlas Copco IAS UK Limited, Flintshire, North Wales CH5 2NS (GB)
(72) Erfinder: WILLIAMS, Samuel, Huntington, Chester Cheshire CH3 6BS (GB)
(74) Vertreter: Patentanwälte Bregenzer und Reule Partnerschaftsgesellschaft mbB
(86) Internationale Anmeldenummer: PCT/EP2019/055974
(87) Internationale Veröffentlichungsnummer: WO 2019/219265

(56) Entgegenhaltungen:
- DE-A1- 102007 022 133
- DE-A1- 102009 049 386
- US-A1- 2012 124 805

## Beschreibung

Die Erfindung betrifft ein Verfahren zum Verbinden zweier vorzugsweise flacher Werkstücke, insbesondere zweier Bleche, gemäß Oberbegriff des Anspruchs 1.

Ein derartiges Verfahren ist beispielsweise in der DE 10 2006 039 718 A1 beschrieben. Bei bekannten Verfahren dieser Art werden zum Verbinden zweier flacher Werkstücke, beispielsweise Bleche oder dergleichen, üblicherweise Hybrid-Verbindungen eingesetzt, die Verbindungskörper, wie Nieten, und zusätzlich einen viskosen Klebstoff zum Verbinden der Werkstücke nutzen. Zum Verbinden der Werkstücke wird der Klebstoff zunächst auf eine Verbindungsoberfläche eines Werkstückes aufgetragen. Die beiden Werkstücke werden dann übereinander angeordnet, wobei sie zwischen sich einen Zwischenspalt begrenzen, in dem der Klebstoff angeordnet ist. Die beiden Werkstücke werden anschließend aneinander mittels der Verbindungskörper fixiert. Der Klebstoff kann dann aushärten. Beim Einbringen der Verbindungskörper kann Luft in den mit Klebstoff gefüllten Zwischenspalt gepresst werden. Dadurch können im Klebstoff mit Luft gefüllte Luftkammern bzw. Luftaustrittskanäle entstehen. Diese können unter Umständen nach außen hin zur Atmosphäre geöffnet sein, wodurch beispielsweise Feuchtigkeit eindringen kann. Das macht die Verbindung korrosionsanfällig. Ähnliche Probleme treten auf, wenn an Stelle der Verbindungskörper andere weitere Verbindungsmittel, wie beispielsweise Schweißverbindungen, zur Anwendung kommen. Aus der US 2012/0124805 A1 ist ein Verfahren bekannt, mit dem Werkstücke durch Auftragen einer flächigen Klebstoffschicht und zusätzliche Einbringung von Clinchverbindungen miteinander verbunden werden. Vor Einbringung der Clinchverbindungen wird überschüssiger Klebstoff nachträglich entfernt.

Die Aufgabe der Erfindung liegt daher darin, ein Verfahren der eingangs genannten Art derart weiterzubilden, dass eine bessere Verbindung der Werkstücke erzielt wird.

Diese Aufgabe wird anhand der technischen Lehre des Anspruches 1 gelöst.

Der Grundgedanke der vorliegenden Erfindung liegt darin, dass die in den Hybrid-Klebebereichen, in denen die Werkstücke jeweils mittels eines weiteren Verbindungsmittels miteinander verbunden werden, je in der Auftragsrichtung gemessene Längeneinheit aufgetragene Klebstoffmenge kleiner ist als die in den Klebebereichen je in der Auftragsrichtung gemessene Längeneinheit aufgetragene Klebstoffmenge. In den Hybrid-Klebebereichen ist daher weniger Klebstoff pro Längeneinheit angeordnet, als in den Klebebereichen, in denen die Werkstücke nur mittels des Klebstoffs miteinander verbunden werden. Der im Zwischenspalt angeordnete Klebstoff kann sich aufgrund der reduzierten Klebstoffmenge in den Hybrid-Klebebereichen besser verteilen. Hierdurch erzielt man den Effekt, dass für die Bedeckung der Verbindungsoberflächen weniger Klebstoff benötigt wird, als bei herkömmlichen Verfahren. Ferner hat dies den Effekt, dass sich der Klebstoff beim Fixieren der beiden Werkstücke gleichmäßig und großflächig über die Hybrid-Klebebereiche und die Klebebereiche, das heißt über die Verbindungsoberflächen, verteilt. Dadurch werden die Verbindungsoberflächen zu einem hohen Maß mit Klebstoff bedeckt, beispielsweise bis zu 95% bei gleichzeitiger Reduzierung des Klebstoffverbrauchs. Ferner kann ein auf ungleich verteilte Klebstoffmengen zurückführbares Ausbeulen der Werkstücke in den Klebebereichen quer zur Auftragsrichtung, was auch als "Quilting" oder als "Ausbildung von Klebstoff taschen" bezeichnet wird, reduziert werden, während im Stand der Technik ein gleichmäßiger Klebstoffauftrag oder eine Reduzierung der Klebstoffmenge im Bereich zwischen den Nieten oder Schweißpunkten diesbezüglich als vorteilhaft angesehen werden.

Die Offenbarung betrifft ferner eine Anordnung mindestens zweier Werkstücke, die paarweise zumindest partiell einander gegenüberliegend angeordnet sind und einen Zwischenspalt begrenzen. In mindestens einem der Zwischenspalte ist ein Klebstoff angeordnet, der in der Art nach dem eingangs beschriebenen Verfahren auf eine erste Verbindungsoberfläche eines Werkstücks aufgebracht ist, um die Werkstücke miteinander zu verbinden. Die Werkstücke sind zusätzlich mittels weiteren Verbindungsmitteln wie beispielsweise Verbindungskörpern oder Schweißpunkten miteinander verbunden.

Das erfindungsgemäße Verfahren kann insbesondere auf dünne Werkstücke angewandt werden, die flach oder gebogen sein können. Es können zwei Werkstücke aus gleichem Material oder zwei Werkstücke aus unterschiedlichen Materialien miteinander verbunden werden. Insbesondere kommen Bleche, beispielsweise aus Stahl, Aluminium oder Magnesium, Druckgussteile oder Werkstücke aus carbonfaserverstärktem Kunststoff in Frage.

Vorzugsweise bildet der Massestrang ein Muster mit einer Wellen-, Zickzack- oder Sägezahnform, in der Art, dass er oszillierend um eine Mittellinie der Auftragsbahn aufgetragen wird. Oszillierend bedeutet, dass der Massestrang sozusagen um die Mittellinie schwingt, so dass der Massestrang mit der Mittellinie Schnittpunkte aufweist. Das Muster ermöglicht ein Ableiten von mittels der weiteren Verbindungsmittel eingebrachter Luft zur Umgebung, so dass die Ausbildung störender Luftkanäle im ausgehärteten Zustand des Klebstoffes zumindest reduziert ist.

Das Muster weist eine Komponente quer zur Auftragsrichtung auf. Die Auftragsbahn kann gerade oder gebogen entlang der ersten Verbindungsoberfläche verlaufen, so dass die Auftragsrichtung in Bezug auf die erste Verbindungsoberfläche konstant ist oder sich punktuell oder kontinuierlich ändern kann. Vorzugsweise wird die Mittellinie von den weiteren Verbindungsmitteln durchsetzt.

Bevorzugt ist der Abstand zweier aufeinanderfolgender Schnittpunkte des Musters mit der Mittellinie in den Hybrid-Klebebereichen größer als in den Klebebereichen. Dadurch wird in den Hybrid-Klebebereichen weniger Klebstoffmasse je Längeneinheit in der Auftragsrichtung aufgetragen. Der Abstand zweier aufeinanderfolgender Schnittpunkte des Musters kann mit der Mittellinie eine Frequenz definieren, mit der der Massestrang auf der ersten Verbindungsoberfläche aufgetragen ist, sozusagen eine Strangfrequenz. Die Strangfrequenz ist dann in den Hybrid-Klebebereichen kleiner als in den Klebebereichen. Das Muster kann insbesondere einer sinusförmigen Schwingung entsprechen.

Alternativ oder ergänzend hierzu kann die maximale Auslenkung des Musters bezüglich der Mittellinie in den Hybrid-Klebebereichen kleiner sein als in den Klebebereichen. Dies hat den Effekt, dass in den Hybrid-Klebebereichen je Längeneinheit in der Auftragsrichtung weniger Klebstoff aufgetragen wird als in den Klebebereichen. Die maximale Auslenkung des Musters bezüglich der Mittellinie kann man auch als Amplitude des Musters bezeichnen. Insbesondere können die Amplitude und/oder die Frequenz des Musters in den Hybrid-Klebebereichen betragsmäßig praktisch null sein, so dass der Massestrang hier die Form einer dünnen Linie hat, die mit der Mittellinie zusammenfällt.

Ein bevorzugtes Konzept sieht vor, dass der Abstand zweier aufeinanderfolgender Schnittpunkte des Musters mit der Mittellinie innerhalb der Hybrid-Klebebereiche und der Klebebereiche jeweils konstant ist und/oder dass die maximale Auslenkung des Musters bezüglich der Mittellinie innerhalb der Hybrid-Klebebereiche und der Klebebereiche jeweils konstant ist. Zudem kann zwischen jeweils einem Hybrid-Klebebereich und einem Klebebereich ein Übergangsbereich angeordnet sein, in dem sich die maximale Auslenkung des Musters bezüglich der Mittellinie und/oder der Abstand zweier aufeinanderfolgender Schnittpunkte des Musters mit der Mittellinie kontinuierlich oder sprunghaft ändert.

Der Massestrang kann erfindungsgemäß auch einen variablen Strangquerschnitt aufweisen, wobei der Strangquerschnitt in den Hybrid-Klebebereichen kleiner ist als in den Klebebereichen. Auch dies hat den Effekt, dass in den Hybrid-Klebebereichen weniger Klebstoff oder Klebstoffmasse aufgetragen wird, als in den Klebebereichen.

Zur Reduzierung des aufgetragenen Klebstoffes oder der Klebstoffmasse in den Hybrid-Klebebereichen ist eine Kombination von zwei oder allen der vorstehend beschriebenen Maßnahmen bevorzugt, nämlich, dass der Massestrang einen variablen Strangquerschnitt aufweist, die maximale Auslenkung des Musters bezüglich der Mittellinie in den Hybrid-Klebebereichen kleiner ist als in den Klebebereichen und der Abstand zweier aufeinanderfolgender Schnittpunkte des Musters mit der Mittellinie in den Hybrid-Klebebereichen größer ist als in den Klebebereichen.

Vorzugsweise werden die Werkstücke nach dem Auftragen des Klebstoffes auf die erste Verbindungsoberfläche aneinander fixiert, insbesondere aufeinander gepresst. Dies kann mittels eines Niederhalters der Stanznietvorrichtung erfolgen, mit der auch die weiteren Verbindungsmittel eingebracht werden, wenn diese als Stanznieten ausgebildet sind, oder durch gesonderte Spannvorrichtungen. Die Verbindungsoberflächen liegen dabei einander gegenüber und begrenzen den Zwischenspalt, in dem der Massestrang angeordnet ist, wobei eine Klebstoff-Aushärtephase des Klebstoffs beginnt. Die Werkstücke werden dann zweckmäßig nach dem Beginn der Klebstoff-Aushärtephase mittels der weiteren Verbindungsmittel miteinander verbunden, insbesondere aber bevor der Klebstoff ausgehärtet ist.

Bevorzugt weisen die Hybrid-Klebebereiche in der Auftragsrichtung eine Länge auf, die wenigstens einer Querschnittsfläche des weiteren Verbindungsmittels entspricht. Beispielsweise kann die Länge ungefähr der 1,5-fachen, der 2-fachen oder der 3-fachen Querschnittsfläche des weiteren Verbindungsmittels entsprechen. Zudem sind die Hybrid-Klebebereiche in der Auftragsrichtung vorzugsweise etwa von gleicher Länge.

Vorzugsweise weisen die Klebebereiche in der Auftragsrichtung eine Länge auf, die wenigstens einem Strangquerschnitt des Massestrangs entspricht. Der schmalste Klebebereich ist nämlich mindestens so breit, wie der Strangquerschnitt des Massestrangs breit ist.

Bevorzugt weisen die Klebebereiche etwa die 1,5-fache, 2-fache oder 3-fache Länge der Hybrid-Klebebereiche auf und sind in der Auftragsrichtung vorzugsweise etwa von gleicher Länge.

Die weiteren Verbindungsmittel können Schweißverbindungen und insbesondere Schweißpunkte sein. Diese werden zweckmäßig entlang der Auftragsbahn angeordnet. Die weiteren Verbindungsmittel können aber auch Verbindungskörper sein, die durch die Werkstücke und den Massestrang hindurch eingebracht werden, wobei bevorzugt Nieten, praktischerweise Stanznieten, verwendet werden. Auch der Einsatz von sowohl Schweißpunkten als auch Verbindungskörpern ist möglich, wobei beispielsweise in einem ersten Abschnitt der Auftragsbahn Schweißpunkte, in einem zweiten Abschnitt der Auftragsbahn Verbindungskörper zum Einsatz kommen können.

Zweckmäßig wird mit mindestens einem der beiden Werkstücke mindestens ein weiteres Werkstück verbunden, und zwar entweder gleichzeitig mit dem Verbinden der beiden Werkstücke oder zeitlich versetzt. Einzelne oder alle Verbindungskörper können dabei auch mehr als zwei Werkstücke durchdringen. Das mindestens eine weitere Werkstück kann auf herkömmliche Weise oder mittels des erfindungsgemäßen Verfahrens angefügt werden.

Nachfolgend wird die Erfindung anhand der in der Zeichnung schematisch dargestellten Ausführungsbeispiele näher erläutert. Es zeigen:
- Figur 1: eine schematische Draufsicht auf eine Verbindungsoberfläche eines Werkstückes, auf die ein Massestrang in einem ersten Wellenmuster aufgebracht ist,
- Figur 2: eine schematische Draufsicht auf eine Verbindungsoberfläche eines Werkstückes, auf die ein Massestrang in einem zweiten Wellenmuster aufgebracht ist,
- Figur 3: eine schematische Draufsicht auf eine Verbindungsoberfläche eines Werkstückes, auf die ein Massestrang in einem dritten Wellenmuster aufgebracht ist.

In der Zeichnung ist schematisch ein Werkstück 10 dargestellt, das mit einem nicht näher dargestellten zweiten Werkstück verbunden wird. Es weist eine Flachgestalt auf und ist insbesondere ein Blech. Das Werkstück 10 weist ferner eine Verbindungsoberfläche 20 auf, die auch als erste Verbindungsoberfläche 20 bezeichnet wird. Sie umfasst mehrere alternierend angeordnete Hybrid-Klebebereiche 80 und Klebebereiche 90, wobei sich die Hybrid-Klebebereiche 80 dadurch auszeichnen, dass sie für die Aufnahme jeweils eines Verbindungskörpers 70 bestimmt sind, der zusätzlich zum Klebstoff der Verbindung beider Werkstücke 10 dient, so dass in den Hybrid-Klebebereichen 80 eine Hybridverbindung hergestellt wird.

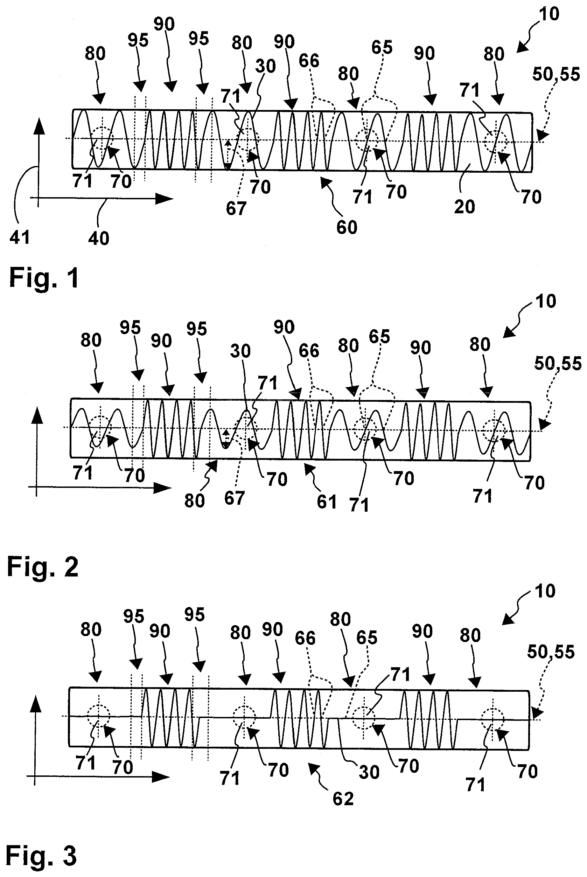

Auf die Verbindungsoberfläche 20 wird im Bereich der Hybrid-Klebebereiche 80 und der Klebebereiche 90 ein aus einem viskosen Klebstoff bestehender Massestrang 30 aufgetragen, der zum Verkleben der beiden Werkstücke 10 verwendet wird. Der Massestrang 30 wird kontinuierlich entlang einer sich in einer Auftragsrichtung 40 erstreckenden Auftragsbahn 50 aufgetragen. Die Auftragsbahn 50 ist exemplarisch eine Gerade. Sie könnte auch bogenförmig oder wellenförmig sein oder einen Knick aufweisen. Der Massestrang 30 wird oszillierend um eine Mittellinie 55 der Auftragsbahn 50 herum aufgetragen, wobei er beim ersten Ausführungsbeispiel gemäß Figur 1 ein erstes Wellenmuster 60, beim zweiten Ausführungsbeispiel gemäß Figur 2 ein zweites Wellenmuster 61 und beim dritten Ausführungsbeispiel gemäß Figur 3 ein drittes Wellenmuster 62 bildet.

Die in den Hybrid-Klebebereichen 80 aufgetragene Klebstoffmenge bezogen auf deren Länge in Auftragsrichtung 40 soll kleiner als die in den Klebebereichen 90 aufgetragene Klebstoffmenge bezogen auf deren Länge in Auftragsrichtung 40 sein. Das heißt, dass die in den Hybrid-Klebebereichen 80 aufgetragene Klebstoffmenge pro Längeneinheit in Auftragsrichtung 40 kleiner ist als die in den Klebebereichen 90 aufgetragene Klebstoffmenge pro Längeneinheit in Auftragsrichtung 40. Um die in den Hybrid-Klebebereichen 80 aufgetragene Klebstoffmenge zu reduzieren, ist vorgesehen, dass das Wellenmuster 60 in den Hybrid-Klebebereichen 80 und den Klebebereichen 90 unterschiedlich gestaltet wird.

Hierzu wird der Abstand zweier aufeinander folgender Schnittpunkte 65 des ersten Wellenmusters 60 mit der Mittellinie 55 in den Hybrid-Klebebereichen 80 und/oder den Klebebereichen 90 variiert. Der Abstand zweier aufeinander folgender Schnittpunkte 65 des ersten Wellenmusters 60 mit der Mittellinie 55 ist in den Hybrid-Klebebereichen 80 größer als in den Klebebereichen 90. Das erste Wellenmuster 60 weist in den Hybrid-Klebebereichen 80 sozusagen eine kleinere Frequenz als in den Klebebereichen 90 auf. Insgesamt kann damit in den Hybrid-Klebebereichen 80 ein kürzerer Massestrang 30 realisiert werden.

Weiterhin hat jedes Wellenmuster 60, 61, 62 eine maximale Auslenkung 67 bezüglich der Mittellinie 55 in einer quer zur Auftragsrichtung 40 verlaufenden Querrichtung 41. Beim zweiten Wellenmuster 61 (Figur 2) ist zusätzlich zur verringerten Frequenz die maximale Auslenkung 67, die man auch als Amplitude bezeichnen kann, in den Hybrid-Klebebereichen 80 kleiner als in den Klebebereichen 90. Diese Maßnahme verkürzt den Massestrang 30 in den Hybrid-Klebebereichen 80 gegenüber dem ersten Wellenmuster 60 weiter.

Zwischen jedem Hybrid-Klebebereich 80 und jedem Klebebereich 90 ist ein Übergangsbereich 95 angeordnet. In den Übergangsbereichen 95 ändert sich die maximale Auslenkung 67 des zweiten Wellenmusters 61 bezüglich der Mittellinie 55 kontinuierlich oder sprunghaft. In den Übergangsbereichen 95 ändert sich auch der Abstand zweier aufeinanderfolgender Schnittpunkte 65, 66 sowohl des ersten Wellenmusters 60 als auch des zweiten Wellenmusters 61 kontinuierlich oder sprunghaft. Damit kann der Klebstoffauftrag in den Hybrid-Klebebereichen 80 besonders klein sein.

Gemäß Figur 3 ist ein drittes Wellenmuster 62 dargestellt, das einen Spezialfall darstellt. Das dritte Wellenmuster 62 weist in den Hybrid-Klebebereichen 80 eine maximale Auslenkung 67 und einen Abstand zweier aufeinander folgender Schnittpunkte 65, 66 auf, die betragsmäßig nahezu null sind. Durch diese Maßnahme kann der Klebstoffauftrag in den Hybrid-Klebereichen 80 im Vergleich mit den Klebebereichen 90 weiter reduziert werden.

Es kann auch vorgesehen sein, dass der Massestrang 30 einen variablen Strangquerschnitt aufweist. Um in den Hybrid-Klebebereichen 80 weniger Klebstoff aufzutragen, kann der Strangquerschnitt des Massestrangs 30 in den Hybrid-Klebebereichen 80 kleiner eingestellt werden als in den Klebebereichen 90. Hierdurch ergibt sich ein kleineres Klebstoffvolumen, sozusagen ein kleinerer Massestrang 30, in den Hybrid-Klebebereichen 90.

Nach dem Auftragen des Klebstoffs auf die erste Verbindungsoberfläche 20 werden die Werkstücke 10 mit einander gegenüberliegenden Verbindungsoberflächen 20 aneinander fixiert. Beispielsweise werden die Werkstücke 10 aufeinander gepresst. Nach dem Fixieren beginnt der Klebstoff auszuhärten. Während dieser Aushärtephase werden durch die Werkstücke 10 hindurch durch strichpunktierte Linien angedeutete Verbindungskörper 70 eingebracht. Bei den Verbindungskörpern 70 handelt es sich um Nieten, bevorzugt Stanznieten, so wie sie beim Hybridfügen von Blechteilen oder dergleichen eingesetzt werden. Die Verbindungskörper 70 werden in jeden Hybrid-Klebebereich 80 eingebracht, um die Werkstücke 10 aneinander zu fixieren.

Die Hybrid-Klebebereiche 80 weisen in der Auftragsrichtung 40 eine Länge auf, die wenigstens einer Querschnittsfläche 71 des Verbindungskörpers 70 entspricht. Die Hybrid-Klebebereiche 80 können in der Auftragsrichtung 40 auch länger sein, beispielsweise 1,5-mal, 2-mal oder 3-mal so lang.

Vorzugsweise ist der Klebebereich 90 in der Auftragsrichtung 40 wenigstens so lang wie ein Strangquerschnitt des Massestrangs breit ist. Der Klebebereich 90 ist aber bevorzugt mindestens genau so lang wie ein Hybrid-Klebebereich 80, vorzugsweise ist er 1,5-mal, 2-mal oder 3-mal so lang.

Die Verwendung von Verbindungskörpern 70 im vorliegenden Ausführungsbeispiel ist nicht die einzige Möglichkeit, eine Hybridverbindung zu schaffen. Insbesondere können die in der Zeichnung dargestellten Stanznieten 70 vollständig oder teilweise durch Schweißverbindungen, insbesondere in Form von Schweißpunkten, ersetzt werden.

## Patentansprüche

1. Verfahren zum Verbinden zweier Werkstücke (10), insbesondere zweier Bleche, die jeweils eine Verbindungsoberfläche (20) zum Verbinden der Werkstücke (10) aufweisen, wobei auf eine erste Verbindungsoberfläche (20) ein viskoser Klebstoff in Form eines kontinuierlichen Massestrangs (30) entlang einer sich in einer Auftragsrichtung (40) erstreckenden Auftragsbahn (50) aufgetragen wird, wobei die Verbindungsoberflächen (20) einander gegenüberliegend angeordnet werden, um einen Zwischenspalt zu begrenzen, in dem der Massestrang (30) angeordnet ist, wobei die Werkstücke (10) im Bereich des Massestrangs (30) mittels mindestens eines weiteren Verbindungsmittels (70) miteinander verbunden werden, wobei die erste Verbindungsoberfläche (20) mehrere alternierend angeordnete Hybrid-Klebebereiche (80) und Klebebereiche (90) umfasst und wobei in jedem Hybrid-Klebebereich (80) ein weiteres Verbindungsmittel (70) angeordnet wird, **dadurch gekennzeichnet, dass** die in den Hybrid-Klebebereichen (80) je in der Auftragsrichtung (40) gemessene Längeneinheit aufgetragene Klebstoffmenge kleiner ist als die in den Klebebereichen je in der Auftragsrichtung (40) gemessene Längeneinheit aufgetragene Klebstoffmenge.

2. Verfahren nach Anspruch 1, **dadurch gekennzeichnet, dass** der Massestrang (30) ein Muster (60, 61, 62) mit Wellen-, Zickzack- oder Sägezahnform bildet, in der Art, dass er oszillierend um eine Mittellinie (55) der Auftragsbahn (50) aufgetragen wird.

3. Verfahren nach Anspruch 2, **dadurch gekennzeichnet, dass** der Abstand zweier aufeinanderfolgender Schnittpunkte (65, 66) des Musters (60, 61, 62) mit der Mittellinie (55) in den Hybrid-Klebebereichen (80) größer ist als in den Klebebereichen (90).

4. Verfahren nach Anspruch 2 oder 3, **dadurch gekennzeichnet, dass** die maximale Auslenkung (67) des Musters (61, 62) bezüglich der Mittellinie (55) in den Hybrid-Klebebereichen (80) kleiner ist als in den Klebebereichen (90).

5. Verfahren nach einem der Ansprüche 3 oder 4, **dadurch gekennzeichnet, dass** der Abstand zweier aufeinanderfolgender Schnittpunkte (65, 66) des Musters (60, 61, 62) mit der Mittellinie (55) innerhalb der Hybrid-Klebebereiche (80) und der Klebebereiche (90) jeweils konstant ist und/oder dass die maximale Auslenkung (67) des Musters (60, 61, 62) bezüglich der Mittellinie (55) innerhalb der Hybrid-Klebebereiche (80) und der Klebebereiche (90) jeweils konstant ist.

6. Verfahren nach einem der Ansprüche 2 bis 5, **dadurch gekennzeichnet, dass** zwischen jeweils einem Hybrid-Klebebereich (80) und einem Klebebereich (90) ein Übergangsbereich (95) angeordnet ist, in dem sich die maximale Auslenkung (67) des Musters (60, 61, 62) bezüglich der Mittellinie (55) und/oder der Abstand zweier aufeinanderfolgender Schnittpunkte (65, 66) des Musters (60, 61, 62) mit der Mittellinie (55) kontinuierlich oder sprunghaft ändert.

7. Verfahren nach einem der vorhergehenden Ansprüche, **dadurch gekennzeichnet, dass** der Massestrang (30) einen variablen Strangquerschnitt aufweist, wobei der Strangquerschnitt in den Hybrid-Klebebereichen (80) kleiner ist als in den Klebebereichen (90).

8. Verfahren nach einem der vorhergehenden Ansprüche, **dadurch gekennzeichnet, dass** die Werkstücke (10) nach dem Auftragen des Klebstoffes auf die erste Verbindungsoberfläche (20) aneinander fixiert werden, insbesondere aufeinander gepresst werden, so dass sich die Verbindungsoberflächen (20) einander gegenüberliegen und den Zwischenspalt begrenzen, in dem der Massestrang (30) angeordnet ist, so dass eine Klebstoff-Aushärtephase des Klebstoffs beginnt, wobei die Werkstücke (10) mittels der weiteren Verbindungsmittel (70) zeitlich nach dem Beginn der Klebstoff-Aushärtephase und vorzugsweise vor deren Ende miteinander verbunden werden.

9. Verfahren nach einem der vorhergehenden Ansprüche, **dadurch gekennzeichnet, dass** die Hybrid-Klebebereiche (80) in der Auftragsrichtung (40) eine Länge aufweisen, die wenigstens einer Querschnittsfläche (71) des weiteren Verbindungsmittels (70) entspricht.

10. Verfahren nach einem der vorhergehenden Ansprüche, **dadurch gekennzeichnet, dass** die Klebebereiche (90) in der Auftragsrichtung (40) eine Länge aufweisen, die wenigstens einem Strangquerschnitt des Massestrangs (30) entspricht.

11. Verfahren nach einem der vorhergehenden Ansprüche, **dadurch gekennzeichnet, dass** die weiteren Verbindungsmittel zumindest teilweise Schweißverbindungen und insbesondere Schweißpunkte sind.

12. Verfahren nach Anspruch 11, **dadurch gekennzeichnet, dass** die Schweißverbindungen entlang der Auftragsbahn (50) angeordnet sind.

13. Verfahren nach einem der vorhergehenden Ansprüche, **dadurch gekennzeichnet, dass** die weiteren Verbindungsmittel zumindest teilweise Verbindungskörper (70) sind, die durch die Werkstücke (10) und den Massestrang (30) hindurch eingebracht werden.

14. Verfahren nach Anspruch 13, **dadurch gekennzeichnet, dass** die Verbindungskörper (70) Nieten sind.

15. Verfahren nach einem der vorhergehenden Ansprüche, **dadurch gekennzeichnet, dass** mit mindestens einem der Werkstücke (10) mindestens ein weiteres Werkstück verbunden wird.

## Claims

1. Method for joining two workpieces (10), in particular two metal sheets, which each have a joining surface (20) for joining the workpieces (10), wherein a viscous adhesive in the form of a continuous material strand (30) is applied to a first joining surface (20), along an application track (50) that extends in an application direction (40), wherein the joining surfaces (20) are arranged to lie opposite one another so as to delimit an intermediate gap in which the material strand (30) is arranged, wherein the workpieces (10) are joined to one another in the region of the material strand (30), with the aid of at least one further joining means (70), wherein the first joining surface (20) comprises multiple alternately arranged hybrid adhesion regions (80) and adhesion regions (90), and wherein a further joining means (70) is arranged in each hybrid adhesion region (80), **characterized in that** the amount of adhesive applied in the hybrid adhesion regions (80), per length unit measured in the application direction (40), is less than the amount of adhesive applied in the adhesion regions (90), per length unit measured in the application direction (40).

2. Method according to claim 1, **characterized in that** the material strand (30) forms a pattern (60, 61, 62) having a wave, zigzag or saw-tooth shape, in such a manner that it is applied oscillating about a center line (55) of the application track (50).

3. Method according to claim 2, **characterized in that** the distance between two consecutive intersection points (65, 66) of the pattern (60, 61, 62) with the center line (55) is greater in the hybrid adhesion regions (80) than in the adhesion regions (90).

4. Method according to claim 2 or 3, **characterized in that** the maximum deflection (67) of the pattern (61, 62) with reference to the center line (55) is less in the hybrid adhesion regions (80) than in the adhesion regions (90).

5. Method according to one of claims 3 or 4, **characterized in that** the distance between two consecutive intersection points (65, 66) of the pattern (60, 61, 62) with the center line (55) is constant within the hybrid adhesion regions (80) and the adhesion regions (90), in each instance, and/or that the maximum deflection (67) of the pattern (60, 61, 62) with reference to the center line (55) is constant within the hybrid adhesion regions (80) and the adhesion regions (90), in each instance.

6. Method according to one of claim 2 to 5, **characterized in that** a transition region (95) is arranged between a hybrid adhesion region (80) and an adhesion region (90), in each instance, in which transition region (95) the maximum deflection (67) of the pattern (60, 61, 62) with reference to the center line (55) and/or the distance between two consecutive intersection points (65, 66) of the pattern (60, 61, 62) with the center line (55) changes continuously or suddenly.

7. Method according to one of the preceding claims, **characterized in that** the material strand (30) has a variable strand cross-section, wherein the strand cross-section is smaller in the hybrid adhesion regions (80) than in the adhesion regions (90).

8. Method according to one of the preceding claims, **characterized in that** the workpieces (10) are fixed in place on one another after application of the adhesive to the first joining surface (20), in particular pressed onto one another, so that the joining surfaces (20) lie opposite one another and delimit the intermediate gap in which the material strand (30) is arranged, so that an adhesive hardening phase of the adhesive begins, wherein the workpieces (10) are joined to one another after the start of the adhesive hardening phase, in terms of time, by means of the further joining means (70), and preferably before the end of the adhesive hardening phase.

9. Method according to one of the preceding claims, **characterized in that** the hybrid adhesion regions (80) have a length in the application direction (40) that at least corresponds to a cross-section surface (71) of the further joining means (70).

10. Method according to one of the preceding claims, **characterized in that** the adhesion regions (90) have a length in the application direction (40) that at least corresponds to a strand cross-section of the material strand (30).

11. Method according to one of the preceding claims, **characterized in that** the further joining means are weld connections and, in particular, weld points, at least in part.

12. Method according to claim 11, **characterized in that** the weld connections are arranged along the application track (50).

13. Method according to one of the preceding claims, **characterized in that** the further joining means are joining bodies (70), at least in part, which are introduced through the workpieces (10) and the material strand (30).

14. Method according to claim 13, **characterized in that** the joining bodies (70) are rivets.

15. Method according to one of the preceding claims, **characterized in that** at least one further workpiece is joined to at least one of the workpieces (10).

## Revendications

1. Procédé pour assembler deux pièces (10), notamment deux tôles, qui présentent chacune une surface d'assemblage (20) pour assembler les pièces (10), un adhésif visqueux étant appliqué sur une première surface d'assemblage (20) sous la forme d'un cordon de masse continu (30) le long d'une bande d'application (50) s'étendant dans une direction d'application (40), les surfaces d'assemblage (20) étant agencées en vis-à-vis l'une de l'autre afin de délimiter un espace intermédiaire dans lequel est agencé le cordon de masse (30), les pièces (10) étant assemblées entre elles dans la zone du cordon de masse (30) au moyen d'au moins un autre moyen d'assemblage (70), la première surface d'assemblage (20) comprenant plusieurs zones adhésives hybrides (80) et zones adhésives (90) agencées en alternance, et un autre moyen d'assemblage (70) étant agencé dans chaque zone adhésive hybride (80), **caractérisé en ce que** la quantité d'adhésif appliquée dans les zones adhésives hybrides (80) par unité de longueur mesurée dans la direction d'application (40) est inférieure à la quantité d'adhésif appliquée dans les zones adhésives par unité de longueur mesurée dans la direction d'application (40).

2. Procédé selon la revendication 1, **caractérisé en ce que** le cordon de masse (30) forme un motif (60, 61, 62) en forme de vague, de zigzag ou de dents de scie, de telle sorte qu'il est appliqué de manière oscillante autour d'une ligne centrale (55) de la bande d'application (50).

3. Procédé selon la revendication 2, **caractérisé en ce que** la distance entre deux points d'intersection successifs (65, 66) du motif (60, 61, 62) avec la ligne centrale (55) est plus grande dans les zones adhésives hybrides (80) que dans les zones adhésives (90).

4. Procédé selon la revendication 2 ou 3, **caractérisé en ce que** la déviation maximale (67) du motif (61, 62) par rapport à la ligne centrale (55) est plus petite dans les zones adhésives hybrides (80) que dans les zones adhésives (90).

5. Procédé selon l'une quelconque des revendications 3 ou 4, **caractérisé en ce que** la distance entre deux points d'intersection successifs (65, 66) du motif (60, 61, 62) avec la ligne centrale (55) est respectivement constante à l'intérieur des zones adhésives hybrides (80) et des zones adhésives (90) et/ou **en ce que** la déviation maximale (67) du motif (60, 61, 62) par rapport à la ligne centrale (55) est respectivement constante à l'intérieur des zones adhésives hybrides (80) et des zones adhésives (90).

6. Procédé selon l'une quelconque des revendications 2 à 5, **caractérisé en ce qu'**entre respectivement une zone adhésive hybride (80) et une zone adhésive (90), est agencée une zone de transition (95) dans laquelle la déviation maximale (67) du motif (60, 61, 62) par rapport à la ligne centrale (55) et/ou la distance entre deux points d'intersection successifs (65, 66) du motif (60, 61, 62) avec la ligne centrale (55) varie de manière continue ou par sauts.

7. Procédé selon l'une quelconque des revendications précédentes, **caractérisé en ce que** le cordon de masse (30) présente une section transversale de cordon variable, la section transversale de cordon étant plus petite dans les zones adhésives hybrides (80) que dans les zones adhésives (90).

8. Procédé selon l'une quelconque des revendications précédentes, **caractérisé en ce que** les pièces (10) sont fixées l'une à l'autre, notamment pressées l'une sur l'autre, après l'application de l'adhésif sur la première surface d'assemblage (20), de telle sorte que les surfaces d'assemblage (20) sont en vis-à-vis et délimitent l'espace intermédiaire dans lequel le cordon de masse (30) est agencé, de telle sorte qu'une phase de durcissement d'adhésif de l'adhésif commence, les pièces (10) étant assemblées entre elles au moyen des autres moyens d'assemblage (70) après le début de la phase de durcissement d'adhésif et de préférence avant la fin de celle-ci.

9. Procédé selon l'une quelconque des revendications précédentes, **caractérisé en ce que** les zones adhésives hybrides (80) présentent, dans la direction d'application (40), une longueur correspondant à au moins une surface de section transversale (71) de l'autre moyen d'assemblage (70).

10. Procédé selon l'une quelconque des revendications précédentes, **caractérisé en ce que** les zones adhésives (90) présentent, dans la direction d'application (40), une longueur correspondant à au moins une section transversale de cordon du cordon de masse (30).

11. Procédé selon l'une quelconque des revendications précédentes, **caractérisé en ce que** les autres moyens d'assemblage sont au moins en partie des assemblages soudés et notamment des points de soudure.

12. Procédé selon la revendication 11, **caractérisé en ce que** les assemblages soudés sont agencés le long de la bande d'application (50).

13. Procédé selon l'une quelconque des revendications précédentes, **caractérisé en ce que** les autres moyens d'assemblage sont au moins partiellement des corps d'assemblage (70) insérés à travers les pièces (10) et le cordon de masse (30).

14. Procédé selon la revendication 13, **caractérisé en ce que** les corps d'assemblage (70) sont des rivets.

15. Procédé selon l'une quelconque des revendications précédentes, **caractérisé en ce qu'**au moins une autre pièce est assemblées avec au moins l'une des pièces (10).
